# FASCICULE DE BREVET EUROPEEN

(11) **EP 4 199 369 B1**
(45) Date de publication et mention de la délivrance du brevet: **07.02.2024**
(21) Numéro de dépôt: 22213256.5
(22) Date de dépôt: 13.12.2022
(51) Int. Cl.: H04B 3/54

(54) **PROCÉDÉ ET DISPOSITIF DE NOTIFICATION D'UNE COUPURE D'ÉLECTRICITÉ**
VERFAHREN UND VORRICHTUNG ZUR MELDUNG EINER ELEKTRISCHEN UNTERBRECHUNG
METHOD AND DEVICE FOR NOTIFYING OF POWER OUTAGE

(30) Priorité: 15.12.2021 FR 2113554
(43) Date de publication de la demande: 21.06.2023
(73) Titulaire: Sagemcom Energy & Telecom SAS, 92500 Rueil Malmaison (FR)
(72) Inventeur: RAZAZIAN, Kaveh, 92500 RUEIL MALMAISON (FR)
(74) Mandataire: Cabinet Le Guen Maillet

(56) Documents cités:
- FR-A1- 3 093 841
- US-A1- 2019 296 797

## Description

### DOMAINE TECHNIQUE

La présente invention concerne un procédé et un dispositif d'émission d'un message indiquant une détection d'une coupure de la fourniture en énergie électrique.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs noeuds (notamment concentrateurs de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais).

Dans une évolution de la norme G3-PLC définie dans une Annexe H de la recommandation ITU-T G.9903, par exemple la version2017 Amendement 1 (05/2021), appelée G3-PLC Hybrid PLC & RF, un canal radio RF (acronyme de radio-fréquence) peut être utilisé à la place d'une desdites bandes fréquentielles PLC. Plus précisément, cette version de la norme permet l'utilisation occasionnelle d'une couche physique radio secondaire basée sur une modulation SUN FSK telle que définie dans le standard IEEE 802.15.4:2015. Ainsi, en utilisant les différents media G3-PLC et RF pour transmettre des données, le réseau d'alimentation électrique maximise sa couverture et sa résilience. Un noeud réseau d'alimentation électrique capable d'émettre et de recevoir des données en utilisant les deux média (PLC et RF) est appelé noeud hybride.

Toutefois, dans G3-PLC Hybrid PLC & RF, le choix de communiquer entre deux noeuds hybrides du réseau de communication en utilisant soit une bande fréquentielle PLC soit un canal radio RF est déterminé au moment de la construction ou de la reconstruction des routes de communication ou pendant le transport de données de/vers le concentrateur de données. Avec l'émergence des réseaux électriques intelligent, de nouvelles applications se rajoutent, comme la gestion de coupure de courant (« LAST GASP » en anglais). Cette application s'avère de plus en plus nécessaire pour une meilleure gestion des systèmes et réseaux électriques.

La demande de brevet US2019/296797 divulgue un système qui comprend un réseau de communication par courant porteur.

La demande de brevet FR3093841 divulgue un système de gestion automatisée de comptage dans le cadre d'un service de distribution électrique.

La transmission de messages indiquant une coupure de la fourniture en énergie électrique doit être privilégiée. Néanmoins, l'utilisation des technologies classiques de large diffusion de tels messages dans le réseau risque d'encombrer celui-ci et de générer la perte de données transmises liée à des phénomènes de collision.

### EXPOSE DE L'INVENTION

La présente invention vise à s'assurer que la transmission de messages indiquant une coupure de la fourniture en énergie électrique soit la plus fiable possible tout en évitant d'encombrer le réseau.

A cette fin, selon un premier aspect, l'invention propose un procédé de transmission d'un message d'un premier dispositif noeud vers un ou plusieurs dispositifs noeuds voisins dudit dispositif noeud, lesdits dispositifs noeuds appartenant à un réseau d'alimentation électrique utilisant des communications par courants porteurs en ligne et par radio, caractérisé en ce que le procédé comporte les étapes de :
- détection, par le premier dispositif noeud, d'une coupure de la fourniture en énergie électrique,
- vérification, par le premier dispositif noeud, dans une table de routage, si le premier dispositif noeud est relié par une liaison radio à un dispositif noeud voisin,
- émission par le premier dispositif noeud, si le premier dispositif noeud est relié par une liaison radio à un dispositif noeud voisin, d'un message point à point par la liaison radio au dispositif noeud voisin, le message point à point indiquant qu'une coupure de la fourniture en énergie électrique est détectée par le premier dispositif noeud,
- émission par le premier dispositif noeud, si le premier dispositif noeud n'est pas relié par une liaison radio à un dispositif noeud voisin, d'un message de diffusion radio indiquant qu'une coupure de la fourniture en énergie électrique est détectée par le premier dispositif noeud.

L'invention concerne aussi un dispositif de transmission d'un message d'un premier dispositif noeud vers un ou plusieurs dispositifs noeuds voisins dudit dispositif noeud, lesdits dispositifs noeuds appartenant à un réseau d'alimentation électrique utilisant des communications par courants porteurs en ligne et par radio, caractérisé en ce que le dispositif comporte :
- des moyens de détection, compris dans le premier dispositif noeud, d'une coupure de la fourniture en énergie électrique,
- des moyens de vérification, compris dans le premier dispositif noeud, dans une table de routage, si le premier dispositif noeud est relié par une liaison radio à un dispositif noeud voisin,
- des moyens d'émission, compris dans le premier dispositif noeud, si le premier dispositif noeud est relié par une liaison radio à un dispositif noeud voisin, d'un message point à point par la liaison radio au dispositif noeud voisin, le message point à point indiquant qu'une coupure de la fourniture en énergie électrique est détectée par le premier dispositif noeud,
- des moyens d'émission, compris dans le premier dispositif noeud, si le premier dispositif noeud n'est pas relié par une liaison radio à un dispositif noeud voisin, d'un message de diffusion radio en utilisant une source d'alimentation externe telle que des piles ou Super CAP. indiquant qu'une coupure de la fourniture en énergie électrique est détectée par le premier dispositif noeud.

Ainsi, la présente invention permet de s'assurer que la transmission de messages indiquant une coupure de la fourniture en énergie électrique soit la plus fiable possible tout en évitant d'encombrer le réseau.

De plus, pendant la coupure de la fourniture en énergie électrique, l'alimentation des composants pour courants porteurs en ligne est gourmande en énergie électrique. Une communication par courants porteurs en lignes nécessite de disposer d'une alimentation électrique du noeud de plus grande capacité, ce qui est pénalisant en termes de coût et d'encombrement.

Selon un mode particulier de l'invention, le message de diffusion radio comporte un champ indiquant un nombre prédéterminé de fois que le message doit être rediffusé par un dispositif noeud recevant le message de diffusion.

Selon un mode particulier de l'invention, le nombre prédéterminé de fois que le message doit être rediffusé est égal à zéro.

Selon un mode particulier de l'invention, le procédé comporte en outre les étapes de :
- transfert, par un dispositif noeud voisin recevant le message de diffusion radio, à destination d'un dispositif noeud concentrateur d'un message point à point indiquant la coupure de la fourniture en énergie électrique au premier dispositif noeud.

Selon un mode particulier de l'invention, le procédé comporte en outre les étapes de :
- vérification par le dispositif noeud concentrateur si plusieurs messages indiquant que la coupure de la fourniture en énergie électrique est détectée par le premier dispositif noeud sont reçus,
- transfert d'un unique message à un système tête de ligne indiquant que la coupure de la fourniture en énergie électrique est détectée par le premier dispositif noeud.

La présente invention concerne aussi un produit programme d'ordinateur. Il comprend des instructions pour implémenter, par un dispositif noeud, le procédé selon l'un des modes de réalisation précédents, lorsque ledit programme est exécuté par un processeur du dispositif noeud.

Selon un mode particulier de l'invention, le dispositif comporte des moyens en alimentation électrique du noeud pendant au moins la durée d'émission du message point à point ou de diffusion par la liaison radio au dispositif noeud voisin.

La présente invention concerne aussi un support de stockage. Il stocke un programme d'ordinateur comprenant des instructions pour implémenter, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1a] illustre schématiquement un premier exemple de réseau dans lequel la présente invention est implémentée ;
[Fig. 1b] illustre schématiquement un second exemple de réseau dans lequel la présente invention est implémentée ;
[Fig. 2] illustre schématiquement l'architecture d'un compteur dans lequel la présente invention est implémentée ;
[Fig. 3] illustre schématiquement l'architecture d'un concentrateur dans lequel la présente invention est implémentée ;
[Fig. 4] illustre un exemple d'un algorithme exécuté par un dispositif noeud lorsqu'il détecte une coupure de la fourniture en énergie électrique selon la présente invention ;
[Fig. 5] illustre un exemple d'un algorithme exécuté par un compteur lorsqu'il reçoit un message de diffusion selon la présente invention ;
[Fig. 6] illustre un exemple d'un algorithme exécuté par un concentrateur lorsqu'il reçoit des messages notifiant une coupure de la fourniture en énergie électrique.

### EXPOSE DETAILLE DE MODES DE REALISATION

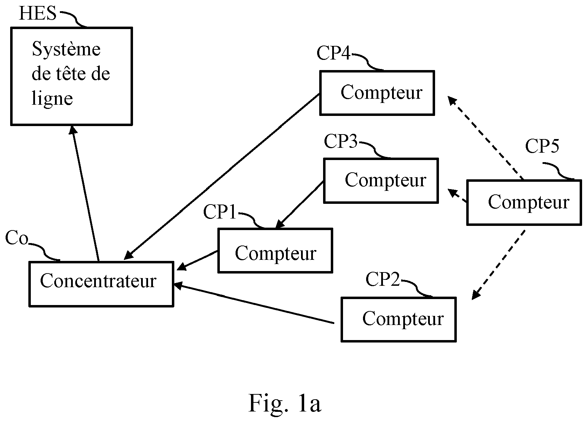

La Fig. 1a illustre schématiquement un premier réseau dans lequel la présente invention est implémentée.

Le premier réseau est un réseau de communication maillé. Le réseau de communication maillé est par exemple un réseau d'alimentation électrique de type AMM. Le réseau de communication maillé s'appuie sur des communications par courants porteurs en ligne PLC ou par radio-fréquences RF pour permettre à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication maillé. Le réseau de communication maillé peut comporter d'autres dispositifs noeuds, par exemple installés au niveau de transformateurs électriques. Le réseau de communication a donc une structure maillée où des dispositifs noeuds jouent le rôle de relais pour augmenter la portée des communications dans le réseau de communication maillé. Ainsi, un même compteur électrique intelligent dispose potentiellement de plusieurs chemins pour atteindre le concentrateur de données, et vice versa. Dans la suite du document, les termes « compteur électrique intelligent » et « compteur » sont utilisés de manière interchangeable.

La présente invention est ainsi particulièrement adaptée au contexte de la technologie G3-PLC Hybrid PLC & RF telle que définie dans la recommandation ITU-T G.9903 (2017) Amendement 1 (05/2021) et plus particulièrement dans l'Annexe H.

Dans l'exemple de la Fig. 1a, le dispositif noeud CP5 détecte une perte de la fourniture en énergie électrique. La table de routage du dispositif noeud CP5 n'indique pas qu'il est relié à un de ses dispositifs noeuds voisins CP2, CP3 et CP4 par une liaison radio. A la détection de la perte de la fourniture en énergie électrique, n'ayant pas, dans sa table de routage, de dispositifs noeuds voisins auquel le dispositif noeud CP5 est relié par une liaison radio, le dispositif noeud CP5 commande l'émission par l'interface radio d'un message de diffusion (« broadcast » en anglais) indiquant une coupure de la fourniture en énergie électrique. Plus précisément, le message de diffusion indiquant une coupure de la fourniture en énergie électrique comporte un champ indiquant un nombre prédéterminé de fois que le message doit être rediffusé par un dispositif noeud recevant le message. Par exemple le nombre prédéterminé est au maximum égal à trois, préférentiellement égal à zéro.

Dans l'exemple de la Fig. 1a, les dispositifs noeuds CP2, CP3 et CP4 sont voisins du dispositif noeud CP5, c'est-à-dire que les dispositifs noeuds CP2 à CP4 reçoivent les signaux représentatifs du message diffusé.

Chaque dispositif noeud CP2 à CP4 décrémente la valeur du champ indiquant un nombre prédéterminé de fois que le message doit être rediffusé d'une unité et vérifie si la valeur décrémentée est égale à zéro.

Dans la négative, chaque dispositif noeud CP2 à CP4 rediffuse le message reçu.

Dans l'affirmative, chaque dispositif noeud CP2 à CP4 consulte une table de routage qui comprend au moins un chemin permettant de communiquer avec un concentrateur Co, sélectionne un chemin et émet à destination du concentrateur Co, par liaison radio ou par courant porteur selon le type de liaison indiqué par la table de routage, un message point à point (« unicast » en anglais) indiquant que le dispositif noeud CP5 a détecté une coupure de la fourniture en énergie électrique.

Dans l'exemple de la Fig. 1a, le dispositif noeud CP2 commande l'émission du message point à point indiquant que le dispositif noeud CP5 a détecté une coupure de la fourniture en énergie électrique au concentrateur Co par une liaison radio, le dispositif noeud CP4 commande l'émission du message point à point indiquant que le dispositif noeud CP5 a détecté une coupure de la fourniture en énergie électrique au concentrateur Co par une liaison CPL et le dispositif noeud CP3 commande l'émission du message point à point indiquant que le dispositif noeud CP5 a détecté une coupure de la fourniture en énergie électrique au concentrateur Co par une liaison radio au dispositif noeud CP1 qui la retransfère au concentrateur Co par une liaison CPL.

Le concentrateur Co reçoit ainsi trois messages point à point indiquant que le dispositif noeud CP5 a détecté une coupure de la fourniture en énergie électrique et transfère un unique message à un système de tête de ligne le message sélectionné HES.

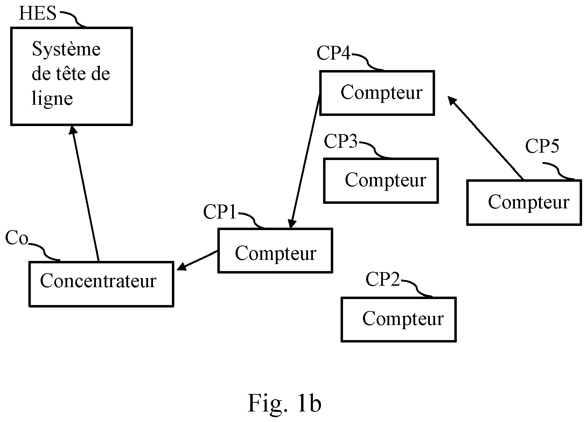

La Fig. 1b illustre schématiquement un second exemple de réseau dans lequel la présente invention est implémentée.

Le premier réseau est un réseau de communication maillé. Le réseau de communication maillé est par exemple un réseau d'alimentation électrique de type AMM. Le réseau de communication maillé s'appuie sur des communications par courants porteurs en ligne PLC ou par radio-fréquences RF pour permettre à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication maillé. Le réseau de communication maillé peut comporter d'autres dispositifs noeuds, par exemple installés au niveau de transformateurs électriques. Le réseau de communication a donc une structure maillée où des dispositifs noeuds jouent le rôle de relais pour augmenter la portée des communications dans le réseau de communication maillé. Ainsi, un même compteur électrique intelligent dispose potentiellement de plusieurs chemins pour atteindre le concentrateur de données, et vice versa. Dans la suite du document, les termes « compteur électrique intelligent » et « compteur » sont utilisés de manière interchangeable.

La présente invention est ainsi particulièrement adaptée au contexte de la technologie G3-PLC Hybrid PLC & RF telle que définie dans la recommandation ITU-T G.9903 (2017) Amendement 1 (05/2021) et plus particulièrement dans l'Annexe H.

Dans l'exemple de la Fig. 1b, le dispositif noeud CP5 détecte une perte de la fourniture en énergie électrique. La table de routage du dispositif noeud CP5 indique que le dispositif noeud CP4 est relié à un dispositif noeud voisin CP4 par une liaison radio. A la détection, ayant au moins un dispositif noeud voisin auquel le dispositif noeud CP5 est relié par une liaison radio, le dispositif noeud CP5 commande l'émission par l'interface radio d'un message point à point au dispositif noeud CP4 indiquant une coupure de la fourniture en énergie électrique.

Le dispositif noeud CP4 émet dans à destination du concentrateur Co un message point à point indiquant que le dispositif noeud CP5 a détecté une coupure de la fourniture en énergie électrique.

Le concentrateur Co reçoit le message point à point indiquant que le dispositif noeud CP5 a détecté une coupure de la fourniture en énergie électrique et le transfère au système de tête de ligne HES.

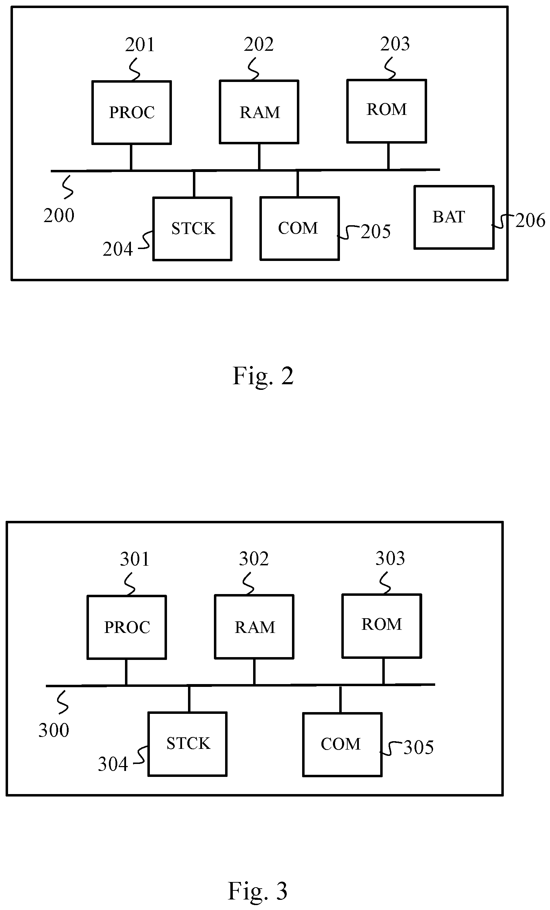

La Fig. 2 illustre schématiquement l'architecture d'un compteur dans lequel la présente invention est implémentée.

Selon l'exemple d'architecture matérielle représenté à la Fig. 2, chaque compteur CP 1 à CP5 comprend, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; au moins une interface de communication 205 permettant au compteur de communiquer avec les équipements du réseau local.

Chaque compteur CP1 à CP5 comporte des moyens de stockage d'énergie électrique BAT 206 permettant d'alimenter en énergie électrique à la détection d'une interruption de la fourniture en énergie électrique le compteur pendant au moins la durée d'émission du message point à point ou de diffusion par la liaison radio au dispositif noeud voisin.

Les moyens de stockage d'énergie électrique BAT sont par exemple une batterie ou un condensateur de forte capacité.

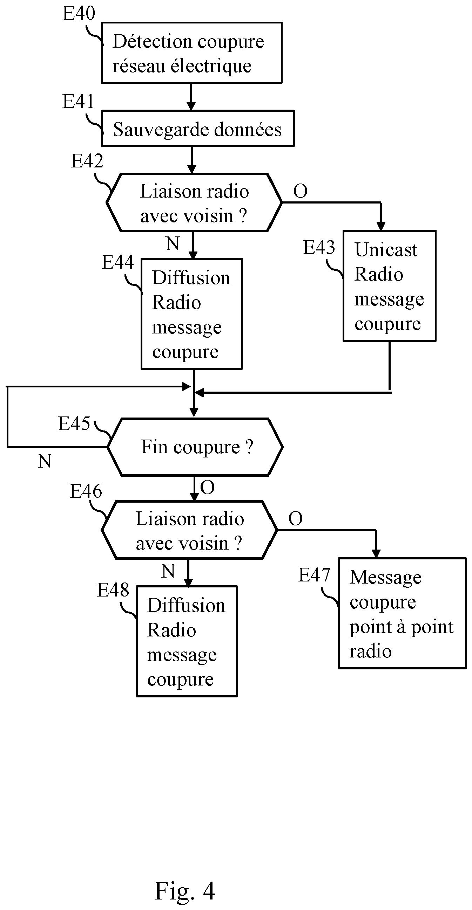

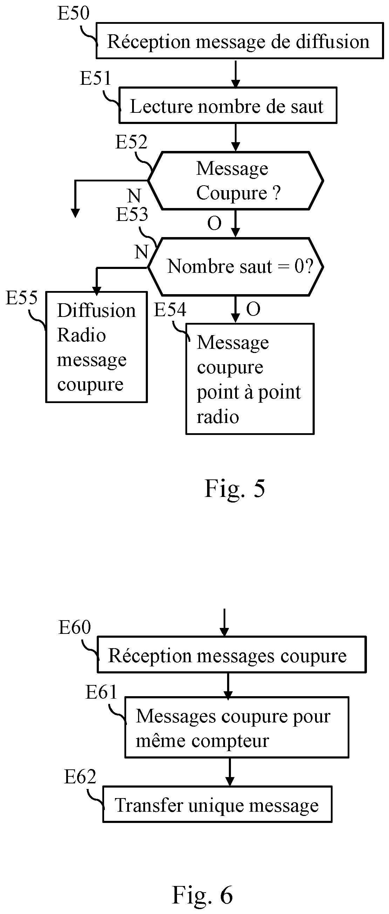

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le compteur est mis sous tension, le processeur 201 est capable de lire de la RAM 202 des instructions et de les exécuter. Ces instructions forment un programme d'ordinateur causant la mise en oeuvre, par le processeur 201, de tout ou partie du procédé décrit en relation avec la Fig. 4 ou la Fig. 5.

Le procédé décrit ci-après en relation avec la Fig. 4 ou 5 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le compteur comprend de la circuiterie électronique configurée pour mettre en oeuvre les procédés décrits en relation avec la Fig. 4 ou 5.

La Fig. 3 illustre schématiquement l'architecture d'un concentrateur dans lequel la présente invention est implémentée.

Selon l'exemple d'architecture matérielle représenté à la Fig. 3, le concentrateur Co comprend , reliés par un bus de communication 300 : un processeur ou CPU (« Central Processing Unit » en anglais) 301 ; une mémoire vive RAM (« Random Access Memory » en anglais) 302 ; une mémoire morte ROM (« Read Only Memory » en anglais) 303 ; une unité de stockage telle qu'un disque dur (ou un lecteur de support de stockage, tel qu'un lecteur de cartes SD (« Secure Digital » en anglais) 304 ; au moins une interface de communication 305 permettant au concentrateur de communiquer avec les équipements du réseau.

Le processeur 301 est capable d'exécuter des instructions chargées dans la RAM 302 à partir de la ROM 303, d'une mémoire externe (non représentée), d'un support de stockage (tel qu'une carte SD), ou d'un réseau de communication. Lorsque le concentrateur Co est mis sous tension, le processeur 301 est capable de lire de la RAM 302 des instructions et de les exécuter. Ces instructions forment un programme d'ordinateur causant la mise en oeuvre, par le processeur 301, de tout ou partie du procédé décrit en relation avec la Fig. 6. Le procédé décrit ci-après en relation avec la Fig. 6 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le concentrateur comprend de la circuiterie électronique configurée pour mettre en oeuvre les procédés décrits en relation avec la Fig. 6.

La Fig. 4 illustre un exemple d'un algorithme exécuté par un dispositif noeud lorsqu'il détecte une coupure de la fourniture en énergie électrique selon la présente invention.

A l'étape E40, un dispositif noeud, par exemple le dispositif noeud CP5, détecte une coupure de la fourniture en énergie électrique. La coupure de la fourniture électrique est par exemple détectée lorsque la tension de l'énergie électrique est inférieure à 70% de la tension nominale de l'énergie électrique.

A l'étape E41, le dispositif noeud CP5 procède à la sauvegarde des données mémorisées dans la mémoire vive dans la mémoire non volatile.

A l'étape E42, le dispositif noeud CP5 vérifie dans sa table de routage, s'il est relié à au moins un dispositif noeud voisin par une liaison radio.

Dans l'affirmative, le dispositif noeud CP5 passe à l'étape E43. Dans la négative, le dispositif noeud CP5 passe à l'étape E44.

A l'étape E43, le dispositif noeud CP5, selon l'exemple de la Fig. 1b, est relié au dispositif noeud voisin CP4 par une liaison radio. Le dispositif noeud CP5 commande l'émission par l'interface radio d'un message point à point au dispositif noeud CP4 indiquant une coupure de la fourniture en énergie électrique et passe à l'étape E45.

A l'étape E44, la table de routage du dispositif noeud CP5, selon l'exemple de la Fig. 1a, n'indique pas que le dispositif noeud CP5 est relié à un de ses dispositifs noeud voisins CP2, CP3 et CP4 par une liaison radio. Le dispositif noeud CP5 commande l'émission par l'interface radio d'un message de diffusion indiquant une coupure de la fourniture en énergie électrique.

Plus précisément, le message indiquant une coupure de la fourniture en énergie électrique comporte un champ indiquant un nombre prédéterminé de fois que le message doit être rediffusé par un compteur recevant le message. Par exemple le nombre prédéterminé est au maximum égal à trois, préférentiellement égal à zéro. Cette opération effectuée, le dispositif noeud CP5 passe à l'étape E45.

A l'étape E45, le dispositif noeud CP5 vérifie si une fin une coupure de la fourniture en énergie électrique est détectée. La fin de coupure de la fourniture électrique est par exemple détectée lorsque la tension de l'énergie électrique est supérieure à 90% de la tension nominale de l'énergie électrique.

Dans l'affirmative, le dispositif noeud CP5 passe à l'étape E46. Dans la négative, le dispositif noeud CP5 retourne à l'étape E45.

A l'étape E46, le dispositif noeud CP5 vérifie dans sa table de routage, s'il est relié à au moins un dispositif noeud voisin.

Dans l'affirmative, le dispositif noeud CP5 passe à l'étape E47. Dans la négative, le dispositif noeud CP5 passe à l'étape E48.

A l'étape E47, le dispositif noeud CP5, selon l'exemple de la Fig. 1b, est relié au dispositif noeud voisin CP4 par une liaison radio. Le dispositif noeud CP5 commande l'émission par l'interface radio d'un message point à point au dispositif noeud CP4 indiquant la fin de la coupure de la fourniture en énergie électrique et interrompt le présent algorithme.

A l'étape E48, le dispositif noeud CP5, selon l'exemple de la Fig. 1a, n'est pas relié à ses dispositifs noeuds voisins CP2, CP3 et CP4 par une liaison radio. Le dispositif noeud CP5 commande l'émission par l'interface radio d'un message de diffusion indiquant la fin de la coupure de la fourniture en énergie électrique.

Plus précisément, le message de diffusion indiquant une coupure de la fourniture en énergie électrique comporte un champ indiquant un nombre prédéterminé de fois que le message doit être rediffusé par un compteur recevant le message. Par exemple le nombre prédéterminé est au maximum égal à trois, préférentiellement égal à zéro.

La Fig. 5 illustre un exemple d'un algorithme exécuté par un compteur lorsqu'il reçoit un message de diffusion selon la présente invention.

A l'étape E50, par exemple le dispositif noeud CP2 dans l'exemple de la Fig. 1a, reçoit un message diffusé.

A l'étape E51, le dispositif noeud CP2 lit la valeur du champ indiquant un nombre prédéterminé de fois que le message doit être rediffusé.

A l'étape E52, le dispositif noeud CP2 vérifie si le message diffusé reçu est un message indiquant une coupure de la fourniture en énergie électrique détectée par le dispositif noeud CP5.

Dans la négative, le dispositif noeud CP2 traite le message diffusé d'une manière classique. Dans l'affirmative, le dispositif noeud CP2 passe à l'étape E53.

A l'étape E53, le dispositif noeud CP2 décrémente la valeur du champ indiquant un nombre prédéterminé de fois que le message doit être rediffusé et vérifie si celui-ci est à la valeur nulle.

Dans l'affirmative, le dispositif noeud CP2 passe à l'étape E54. Dans la négative, le dispositif noeud CP2 passe à l'étape E55.

A l'étape E54, le dispositif noeud CP2 consulte une table de routage qui comprend au moins un chemin permettant de communiquer avec un concentrateur Co, sélectionne un chemin radio ou par courant porteur et émet à destination du concentrateur Co un message point à point indiquant que le dispositif noeud CP5 a détecté une coupure de la fourniture en énergie électrique.

A l'étape E55, le compteur CP4 diffuse le message reçu à l'étape E50.

La Fig. 6 illustre un exemple d'un algorithme exécuté par un concentrateur lorsqu'il reçoit des messages notifiant une coupure de la fourniture en énergie électrique.

A l'étape E60, le concentrateur Co détecte la réception d'un ou plusieurs messages point à point et/ou de diffusion indiquant une coupure de la fourniture en énergie électrique d'un compteur.

A l'étape E61, le concentrateur Co vérifie si les messages reçus indiquent une coupure de la fourniture en énergie électrique pour un même compteur.

Dans l'affirmative, le concentrateur Co sélectionne, à l'étape E62, uniquement un message et transfère au système de tête de ligne HES le message sélectionné. Si un seul message indiquent une coupure de la fourniture en énergie électrique pour un même compteur est reçu, le concentrateur Co transfère au système de tête de ligne HES le message reçu.

## Revendications

1. Procédé de transmission d'un message d'un premier dispositif noeud vers un ou plusieurs dispositifs noeuds voisins dudit dispositif noeud, lesdits dispositifs noeuds appartenant à un réseau d'alimentation électrique utilisant des communications par courants porteurs en ligne et par radio, **caractérisé en ce que** le procédé comporte les étapes de :
- détection (E40), par le premier dispositif noeud, d'une coupure de la fourniture en énergie électrique,
- vérification (E42), par le premier dispositif noeud, dans une table de routage, si le premier dispositif noeud est relié par une liaison radio à un dispositif noeud voisin,
- émission (E43) par le premier dispositif noeud, si le premier dispositif noeud est relié par une liaison radio à un dispositif noeud voisin, d'un message point à point par la liaison radio au dispositif noeud voisin, le message point à point indiquant une coupure de la fourniture en énergie électrique au premier dispositif noeud,
- émission (E44) par le premier dispositif noeud, si le premier dispositif noeud n'est pas relié par une liaison radio à un dispositif noeud voisin, d'un message de diffusion radio indiquant qu'une coupure de la fourniture en énergie électrique est détectée par le premier dispositif noeud.

2. Procédé selon la revendication 1, **caractérisé en ce que** le message de diffusion radio comporte un champ indiquant un nombre prédéterminé de fois que le message doit être rediffusé par un dispositif noeud recevant le message de diffusion.

3. Procédé selon la revendication 2, **caractérisé en ce que** le nombre prédéterminé de fois que le message doit être rediffusé est égal à zéro.

4. Procédé selon l'une quelconque des revendication 1 à 3, **caractérisé en ce que** le procédé comporte en outre les étapes de :
- transfert, par un dispositif noeud voisin recevant le message de diffusion radio, à destination d'un dispositif noeud concentrateur d'un message point à point indiquant que la coupure de la fourniture en énergie électrique est détectée par le premier dispositif noeud.

5. Procédé selon la revendication 4, **caractérisé en ce que** le procédé comporte en outre les étapes de :
- vérification par le dispositif noeud concentrateur si plusieurs messages indiquant la coupure de la fourniture en énergie électrique détectée par le premier dispositif noeud sont reçus,
- transfert d'un unique message à un système tête de ligne indiquant que la coupure de la fourniture en énergie électrique est détectée par le premier dispositif.

6. Dispositif de transmission d'un message d'un premier dispositif noeud vers un ou plusieurs dispositifs noeuds voisins dudit dispositif noeud, lesdits dispositifs noeuds appartenant à un réseau d'alimentation électrique utilisant des communications par courants porteurs en ligne et par radio, **caractérisé en ce que** le dispositif comporte :
- des moyens de détection, compris dans le premier dispositif noeud, d'une coupure de la fourniture en énergie électrique,
- des moyens de vérification, compris dans le premier dispositif noeud, dans une table de routage, si le premier dispositif noeud est relié par une liaison radio à un dispositif noeud voisin,
- des moyens d'émission, compris dans le premier dispositif noeud, si le premier dispositif noeud est relié par une liaison radio à un dispositif noeud voisin, d'un message point à point par la liaison radio au dispositif noeud voisin, le message point à point indiquant une coupure de la fourniture en énergie électrique au premier dispositif noeud,
- des moyens d'émission, compris dans le premier dispositif noeud, si le premier dispositif noeud n'est pas relié par une liaison radio à un dispositif noeud voisin, d'un message de diffusion radio indiquant qu'une coupure de la fourniture en énergie électrique est détectée par le premier dispositif noeud.

7. Dispositif selon la revendication 6, **caractérisé en ce qu'**il comporte en outre des moyens en alimentation électrique du noeud pendant au moins la durée d'émission du message point à point ou de diffusion par la liaison radio au dispositif noeud voisin.

8. Un produit programme d'ordinateur **caractérisé en ce qu'**il comprend des instructions pour implémenter, par un noeud, le procédé selon l'une quelconque des revendications 1 à 5, lorsque ledit programme est exécuté par un processeur du noeud.

9. Un support de stockage **caractérisé en ce qu'**il stocke un programme d'ordinateur comprenant des instructions pour implémenter, par un noeud, le procédé selon l'une quelconque des revendications 1 à 5, lorsque ledit programme est exécuté par un processeur du noeud.

## Patentansprüche

1. Verfahren zur Übertragung einer Nachricht von einer ersten Knotenvorrichtung zu einer oder mehreren Knotenvorrichtungen, die der Knotenvorrichtung benachbart sind, wobei die Knotenvorrichtungen zu einem Stromversorgungsnetz gehören, das Powerline- und Funkkommunikationen verwendet, **dadurch gekennzeichnet, dass** das Verfahren die folgenden Schritte aufweist:
- Detektieren (E40), durch die erste Knotenvorrichtung, einer Unterbrechung der Versorgung mit elektrischer Energie,
- Überprüfen (E42), durch die erste Knotenvorrichtung, in einer Routingtabelle, ob die erste Knotenvorrichtung, durch eine Funkverbindung mit einer benachbarten Knotenvorrichtung verbunden ist,
- Senden (E43), durch die erste Knotenvorrichtung, wenn die erste Knotenvorrichtung durch eine Funkverbindung mit einer benachbarten Knotenvorrichtung verbunden ist, einer Punkt-zu-Punkt-Nachricht über die Funkverbindung an die benachbarte Knotenvorrichtung, wobei die Punkt-zu-Punkt-Nachricht eine Unterbrechung der Versorgung mit elektrischer Energie an der ersten Knotenvorrichtung angibt,
- Senden (E44), durch die erste Knotenvorrichtung, wenn die erste Knotenvorrichtung nicht durch eine Funkverbindung mit einer benachbarten Knotenvorrichtung verbunden ist, einer Funk-Broadcast-Nachricht, die angibt, dass eine Unterbrechung der Versorgung mit elektrischer Energie von der ersten Knotenvorrichtung detektiert ist.

2. Verfahren nach Anspruch 1, **dadurch gekennzeichnet, dass** die Funk-Broadcast-Nachricht ein Feld aufweist, das eine vorbestimmte Anzahl von Malen angibt, die die Nachricht von einer Knotenvorrichtung, die die Broadcast-Nachricht empfängt, wieder ausgesendet werden soll.

3. Verfahren nach Anspruch 2, **dadurch gekennzeichnet, dass** die vorbestimmte Anzahl von Malen, die die Nachricht wieder ausgesendet werden soll, gleich null ist.

4. Verfahren nach einem der Ansprüche 1 bis 3, **dadurch gekennzeichnet, dass** das Verfahren ferner die folgenden Schritte umfasst:
- Übertragen, durch eine benachbarte Knotenvorrichtung, die die Funk-Broadcast-Nachricht empfängt, einer Punkt-zu-Punkt-Nachricht, die angibt, dass die Unterbrechung der Versorgung mit elektrischer Energie von der ersten Knotenvorrichtung detektiert ist, an eine Konzentratorknotenvorrichtung.

5. Verfahren nach Anspruch 4, **dadurch gekennzeichnet, dass** das Verfahren ferner die folgenden Schritte umfasst:
- Überprüfen, durch die Konzentratorknotenvorrichtung, ob mehrere Nachrichten, die die Unterbrechung der Versorgung mit elektrischer Energie angeben, die von der ersten Knotenvorrichtung detektiert ist, empfangen sind,
- Übertragen einer einzelnen Nachricht an ein Kopfstellensystem, die angibt, dass die Unterbrechung der Versorgung mit elektrischer Energie von der ersten Vorrichtung detektiert ist.

6. Vorrichtung zur Übertragung einer Nachricht von einer ersten Knotenvorrichtung zu einer oder mehreren Knotenvorrichtungen, die der Knotenvorrichtung benachbart sind, wobei die Knotenvorrichtungen zu einem Stromversorgungsnetz gehören, das Powerline- und Funkkommunikationen verwendet, **dadurch gekennzeichnet, dass** die Vorrichtung Folgendes aufweist:
- in der ersten Knotenvorrichtung enthaltene Mittel zum Detektieren einer Unterbrechung der Versorgung mit elektrischer Energie,
- in der ersten Knotenvorrichtung enthaltene Mittel zum Überprüfen, in einer Routingtabelle, ob die erste Knotenvorrichtung durch eine Funkverbindung mit einer benachbarten Knotenvorrichtung verbunden ist,
- in der ersten Knotenvorrichtung enthaltene Mittel zum Senden, wenn die erste Knotenvorrichtung durch eine Funkverbindung mit einer benachbarten Knotenvorrichtung verbunden ist, einer Punkt-zu-Punkt-Nachricht über die Funkverbindung an die benachbarte Knotenvorrichtung, wobei die Punkt-zu-Punkt-Nachricht eine Unterbrechung der Versorgung mit elektrischer Energie an der ersten Knotenvorrichtung angibt,
- in der ersten Knotenvorrichtung enthaltene Mittel zum Senden, wenn die erste Knotenvorrichtung nicht durch eine Funkverbindung mit einer benachbarten Knotenvorrichtung verbunden ist, einer Funk-Broadcast-Nachricht, die angibt, dass eine Unterbrechung der Versorgung mit elektrischer Energie von der ersten Knotenvorrichtung detektiert ist.

7. Vorrichtung nach Anspruch 6, **dadurch gekennzeichnet, dass** sie ferner Mittel zur Stromversorgung des Knotens wenigstens während der Dauer des Sendens der Punkt-zu-Punkt- oder Broadcast-Nachricht über die Funkverbindung an die benachbarte Knotenvorrichtung aufweist.

8. Computerprogrammprodukt, **dadurch gekennzeichnet, dass** es Anweisungen umfasst, um durch einen Knoten das Verfahren nach einem der Ansprüche 1 bis 5 zu implementieren, wenn das Programm von einem Prozessor des Knotens ausgeführt wird.

9. Speichermedium, **dadurch gekennzeichnet, dass** ein Computerprogramm darauf gespeichert ist, das Anweisungen umfasst, um durch einen Knoten das Verfahren nach einem der Ansprüche 1 bis 5 zu implementieren, wenn das Programm von einem Prozessor des Knotens ausgeführt wird.

## Claims

1. Method for transmitting a message from a first node device to one or more node devices that are neighbours of said node device, said node devices belonging to an electrical supply network using powerline and radio communications, **characterised in that** the method comprises the steps of:
- detecting (E40), by the first node device, a disconnection of the electrical energy supply,
- checking (E42), by the first node device, in a routing table, whether the first node device is connected by a radio link to a neighbouring node device,
- sending (E43), by the first node device, if the first node device is connected by a radio link to a neighbouring node device, a unicast message by the radio link to the neighbouring node device, the unicast message indicating a disconnection of the electrical energy supply to the first node device,
- sending (E44), by the first node device, if the first node device is not connected by a radio link to a neighbouring node device, a radio broadcast message indicating that a disconnection of the electrical energy supply is detected by the first node device

2. Method according to claim 1, **characterised in that** the radio broadcast message comprises a field indicating a predetermined number of times that the message must be rebroadcast by a node device receiving the broadcast message.

3. Method according to claim 2, **characterised in that** the predetermined number of times that the message must be rebroadcast is equal to zero.

4. Method according to any one of claims 1 to 3, **characterised in that** the method furthermore comprises the steps of:
- transferring, by a neighbouring node device receiving the radio broadcast message, to a concentrator node device, a unicast message indicating that the disconnection of the electrical energy supply is detected by the first node device.

5. Method according to claim 4, **characterised in that** the method furthermore comprises the steps of:
- checking by the concentrator node device whether a plurality of messages indicating the disconnection of the electrical energy supply detected by the first node device are received,
- transferring a single message to a headend system indicating that the disconnection of the electrical energy supply is detected by the first device.

6. Device for transmitting a message from a first node device to one or more node devices that are neighbours of said node device, said node devices belonging to an electrical supply network using powerline and radio communications, **characterised in that** the device comprises:
- means, included in the first node device, for detecting a disconnection of the electrical energy supply,
- means, included in the first node device, for checking, in a routing table, whether the first node device is connected by a radio link to a neighbouring node device,
- means, included in the first node device, for sending, if the first node device is connected by a radio link to a neighbouring node device, a unicast message by the radio link to the neighbouring node device, the unicast message indicating a disconnection of the electrical energy to the first node device,
- means, included in the first node device, for sending, if the first node device is not connected by a radio link to a neighbouring node device, a radio broadcast message indicating that a disconnection of the electrical energy supply is detected by the first node device.

7. Device according to claim 6, **characterised in that** it also comprises means for electrically supplying the node during at least the period of sending of the unicast or broadcast message by the radio link to the neighbouring node device.

8. A computer program product **characterised in that** it comprises instructions for implementing, by a node, the method according to any one of claims 1 to 5, when the program is executed by a processor of the node.

9. A storage medium **characterised in that** it stores a computer program comprising instructions for implementing, by a node, the method according to any one of claims 1 to 5, when said program is executed by a processor of the node.
